(19) Europäisches Patentamt
European Patent Office
Office européen des brevets

(11) **EP 4 583 343 A1**

(12) **EUROPEAN PATENT APPLICATION**

(43) Date of publication:
**09.07.2025 Bulletin 2025/28**

(21) Application number: **24275001.6**

(22) Date of filing: **04.01.2024**

(51) International Patent Classification (IPC):
*H02J 1/10* (2006.01)   *H02J 1/12* (2006.01)
*H02J 1/14* (2006.01)

(52) Cooperative Patent Classification (CPC):
**H02J 1/14; H02J 1/106; H02J 1/12;** H02J 2310/44

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Hamilton Sundstrand Corporation Charlotte, NC 28217-4578 (US)**

(72) Inventors:
• **DINU, Andrei**
  **Leicester (GB)**
• **SADIQ, Muhammad Nouman**
  **Solihull (GB)**
• **BALACHANDRAN , Ajith**
  **Solihull (GB)**

(74) Representative: **Dehns**
  **10 Old Bailey**
  **London EC4M 7NG (GB)**

(54) **AIRCRAFT ELECTRICAL SYSTEM**

(57)     An electrical system for an aircraft comprises a local controller configured to control a power source for an aircraft using droop control in accordance with a droop gain. The local controller is configured, in response to receiving a command, to adjust the droop gain from a first value to a second value progressively over a time interval according to a predetermined function of time.

FIG. 2

## Description

FIELD

The present disclosure relates to an electrical system for an aircraft.

BACKGROUND

It is currently estimated that more than 80% of total aviation CO2 emissions and climate impact stem from air transport routes above 1000 km and these operating routes are likely to remain desirable in the future, given geographical challenges such as bodies of water or mountains which severely limit other transport alternatives. It is therefore imperative that aviation find technological solutions to mitigate greenhouse emissions that are applicable to medium-range aircraft. Options such as all-electric propulsion are readily applicable to small aircraft but this type of solution will face substantial challenges when applied to medium-range aircrafts due to the associated weight. It is therefore generally understood that aircraft serving longer routes will have to rely on gas turbine propulsion and liquid fuels beyond the middle of this century.

Hybrid configurations are well suited to medium-range aircraft. Hybrid-electric propulsion (HEP) is a viable solution for an energy efficient, cleaner, and quieter aeronautical propulsion, since it combines the advantages of a conventional propulsion system such as a gas turbine with an electric approach. Recent advances in electrical motors, energy storage systems, and power electronics converters (PEC) are enabling aircraft propulsion systems to become increasingly electrical.

Traditional commercial aircraft use either 115Vac or 230Vac electrical system architectures for power generation and distribution with some localized DC conversion systems. Moving to a hybrid electrical propulsion system architecture enables the option of a high-voltage DC distribution system. A hybrid aircraft may have multiple power sources coupled to a DC bus, including electrical machines that can operate in generating mode when driven by gas turbine spools (e.g. AC motors that are coupled through AC-DC converters) and battery systems.

It can be desirable to control the power sources of an aircraft, e.g. to increase the proportion of electrical power within a DC distribution system that is supplied by one power source. However, it is not straightforward to do so without undesirable effects, such as a sudden change of torque from a motor, or a significant drop in voltage on a DC distribution system of the aircraft.

SUMMARY

The disclosure provides an electrical system for an aircraft, the electrical system comprising:
a local controller configured to control a power source of the aircraft using droop control in accordance with a droop gain; wherein the local controller is configured, in response to receiving a command, to adjust the droop gain from a first value to a second value, through a plurality of intermediate values, over a time interval according to a predetermined function of time.

The disclosure also provides a method performed by a local controller for a power source of an aircraft, the method comprising:

controlling the power source using droop control in accordance with a droop gain;
receiving a command; and
in response to receiving the command, adjusting the droop gain of the local controller from a first value to a second value, through a plurality of intermediate values, over a time interval according to a predetermined function of time.

The electrical system may be provided independently of the power source-e.g. as a local controller for connection to the power source. However, in some examples the electrical system comprises the power source.

The electrical system may be provided independently of the aircraft. However, in some examples the disclosure provides an aircraft comprising an electrical system as disclosed herein.

The power source may comprise a battery system. The power source may comprise an electrical machine (e.g. operating as an alternator). This may be one electrical machine, or the power source may comprise a group of two or more power sources, e.g. two or more electrical machines mechanically coupled to a common driveshaft, which may be electrically coupled (e.g. in parallel) on a DC bus, and which may be configured to be controlled as a group in accordance with the droop gain. The local controller may be configured to control each power source of the group using a respective independent droop gain determined such that the group is collectively controlled in accordance with the droop gain.

The, or each, electrical machine may be an AC motor, and the electrical system may comprise rectifying circuitry for converting an AC output of the electrical machine to DC, when the electrical machine is operating in a generating mode. The electrical system may comprise inverting circuitry for converting DC to an AC input to the electrical machine, when the electrical machine is operating in motoring mode, e.g. to provide thrust to the aircraft.

The electrical system may comprise or be part of a hybrid-electric propulsion (HEP) system for a hybrid-electric aircraft.

The, or each, electrical machine may be configured for permanent or selective coupling to a driveshaft of an engine of the aircraft. The engine may be gas turbine engine, e.g. a turbofan engine, and the driveshaft may be a spool of the engine. The spool may be a low pressure (LP) spool or a high pressure (HP) spool. The electrical system may comprise a plurality of electrical machines for mechanically coupling to a respective plurality of spools of an engine. The power source may be a high pressure (HP) spool motor, or a low pressure (LP) spool motor.

The electrical system may comprise a DC distribution system, e.g. comprising a DC bus, arranged to receive electrical power from the power source. The DC distribution system may have a nominal voltage, e.g. of 500V or higher, such as 800V. It may be a high-voltage DC (HVDC) bus. The local controller may be configured to control the power source to output a voltage of 500V or higher, such as 800V.

The local controller may comprise converter circuitry for controlling an output voltage of the power source in accordance with the droop gain. The local controller may comprise current-measuring circuitry and may be configured to control the output voltage in dependence on a measured output current in accordance with the droop gain. The local controller may be configured to control the output voltage to be offset from (e.g. below) a predetermined nominal voltage (e.g. of a DC distribution system) by a function of the droop gain (e.g. the droop gain multiplied by an output current of the power source).

Adjusting the droop gain through the plurality of intermediate values (i.e. values strictly between the first value and the second value) over the time interval may comprise adjusting the droop gain monotonically from the first value to the second value. The predetermined function may be a monotonic function of time over the time interval. It be a strictly increasing or strictly decreasing function of time during a first or second half of the time interval. The predetermined function may be a rational function. It may be a ratio of a pair of polynomial functions of time everywhere that it is not constant. The predetermined function may include a portion of time (e.g. a first or second half of the time interval) during which the droop gain is constant, and a portion of time (e.g. a second or first half the time interval) during which it changes. The constant portion may occur before (e.g. when the second value is higher than the first value) or after the changing portion (e.g. when the second value is lower than the first value). Arranging the predetermined function to adjust the droop gain with a constant portion and a changing portion may allow a transition of power whereby a first power source is ramped down followed immediately, or after a time gap, by a second power source ramping up.

The first value may be zero, e.g. when the power source is a single motor or a battery system, or a value close to zero (e.g. less than 1 V/A or 0.5 V/A), e.g. when the power source is a group of electrical machines.

The second value may be a predetermined maximum value, e.g. greater than 5 V/A, such as between 5 V/A and 50 V/A. In some examples, the second value is 10 V/A.

In some examples, the local controller is a first local controller and the power source is a first power source, and the electrical system further comprises a second local controller configured to control a second power source of the aircraft using droop control in accordance with a second droop gain. The second local controller may be configured, in response to receiving a command, or the command, to adjust the second droop gain , in an opposite direction to the first droop gain, over the time interval according to a second predetermined function of time. In this way, one droop gain increases and the other decreases, thereby effecting a transfer in the proportion of power provided by each of the power sources. In some examples, the second local controller may be configured to adjust the second droop gain from the second value to the first value, through a plurality of intermediate values-i.e. such that the second droop gain has the second value at a start of the time interval and the first value at an end of the time interval-although this is not essential in every example. The second predetermined function of time may be a monotonic function of time over the time interval. It be a strictly decreasing or strictly increasing function of time during a second or first half of the time interval. It may include a portion of time (e.g. a second or first half of the time interval) during which the droop gain is constant, and a portion of time (e.g. a first or second half the time interval) during which it changes. In some examples, over the time interval, the first predetermined function is constant everywhere that the second predetermined function is non-constant, and the second predetermined function is constant everywhere that the second predetermined function is non-constant.

The first power source and the second power source may be electrically coupled to a common distribution system (e.g. the same DC bus). The second power source may be a battery system or an electrical machine.

The second predetermined function may be a reflection in time of the first predetermined function-i.e. they may be mirror images of each about a midpoint of the time interval.

The electrical system may comprise a central controller, communicably coupled to the, or each, local controller, and configured to issue the command to the local controller. It may be configured to send the command over a Control Area Network (CAN) bus. The command may be a single broadcast or multicast message that may be received by both local controllers, or the central controller may be configured to issue a different respective command to each local controller (e.g. in close temporal succession). Each local controller may be configured to start adjusting its droop gain immediately after receiving the command, although this is not essential.

The time interval(s) during which each droop gain is adjusted may be preconfigured in the, or each, local controller. The time interval may be greater than 0.5 seconds. It may be less than 5 seconds. It may equal 1 second. However, in some examples, the central controller may communicate a duration of the time interval to each local controller, e.g. as a parameter of the command.

In some examples, each local controller may adjust the droop gain in accordance with a set of droop-gain values stored in a memory of the local controller, e.g. stored in a look-up table. In other examples, the local controller may evaluate the predetermined function numerically to calculate a series of droop gain values over time, e.g. using one or more parameters for the function stored on the local controller. Each local controller may be configured to implement one predetermined function to use when increasing the droop gain and another predetermined function to use when decreasing the droop gain.

The first and second predetermined functions of time may be such that the ratio of the electrical power output by the first and second power sources changes linearly over the time interval.

In some examples, the adjustment of the droop gains may be carried out such that a voltage on a DC distribution system is maintained within +/-10% or +/-5% of a nominal value during the time interval. This can ensure that no loads connected to the DC distribution system are without sufficient voltage during the transitionary time interval.

Thus, it will be seen that, in accordance with examples of the disclosure, by applying an adaptive droop gain control over a time interval according to predetermined functions of time, there can be a smooth change from a first power source to a second power source for the aircraft.

Features of any aspect or example described herein may, wherever appropriate, be applied to any other aspect or example described herein. Where reference is made to different examples or sets of examples, it should be understood that these are not necessarily distinct but may overlap.

BRIEF DESCRIPTION OF THE DRAWINGS

Certain examples of the disclosure will now be described, by way of example only, with reference to the accompanying drawings, in which:

Fig. 1 is a schematic diagram of aircraft components and an electrical system according to an example of the present disclosure;

Fig. 2 is a flowchart depicting a method for adjusting local-controller droop gain according to an example of the present disclosure;

Fig. 3 is a graph of two droop gains for two aircraft power sources, as the droop gains are changed over time according to an example of the present disclosure; and

Fig. 4 is a graph of the electrical current drawn from each of the two power sources, and of a resulting voltage on the DC bus.

DETAILED DESCRIPTION

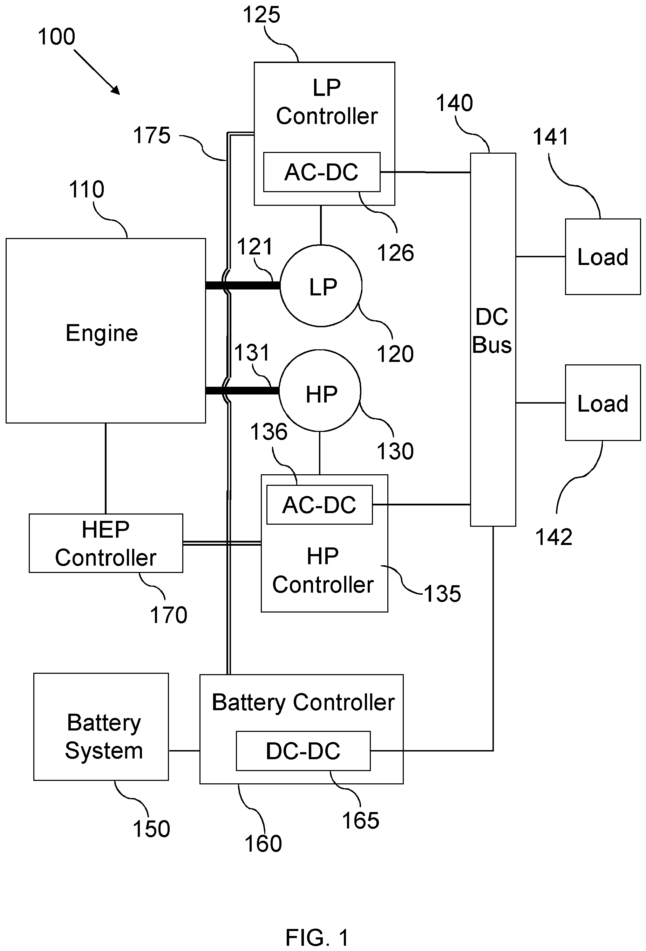

Fig. 1 schematically shows an electrical system 100 of the present disclosure, coupled to a gas turbine engine 110 of a hybrid-electric aircraft. The engine 110 has a low pressure (LP) spool 121 and a high pressure (HP) spool 131.

The LP spool 121 is mechanically connectable to an AC electric LP-spool machine 120 of the electrical system 100, which is controlled by a local LP controller 125. The HP spool is mechanically connectable to an AC electric HP-spool machine 130 of the electrical system 100, which is controlled by a local HP controller 135. The HP and LP machines 120, 130 can each be operated in a motoring mode, in which they consume electrical power to provide thrust to the aircraft, and in a generating mode, in which they generate electrical power from the rotation of the respective spool 121, 131. Electricity generated by the LP and HP spool machines 120, 130 is rectified by respective AC-DC converters 126, 136 before being passed to a high-voltage (e.g. -800V) DC bus 140.

A battery system 150 is controlled by a local battery controller 160, and is connected to the DC bus 140 via a DC-DC converter 165.

An exemplary first load 141 and second load 142 are shown connected to the DC bus 140. These loads 141, 142 may be any load which could be present on an aircraft, e.g. lights, flight computers, air conditioning, etc. There may be any number of such loads.

The local controllers 125, 135, 160 are configured to control the output from their respective power sources 120, 130, 150 in response to commands issued from a central hybrid electric propulsion (HEP) controller 170 over a Control Area Network (CAN) bus 175. They may do this by controlling the voltage that is output to the DC bus 140 by the respective power source, for example by adjusting the switching of transistors within the power converters 126, 136, 165 to provide a desired output voltage (e.g. using variable pulse-width modulation).

The local controllers 125, 135, 160 may include digital logic, such as one or more ASICs, FPGAs, and/or microcontrollers. They may include analog circuitry such as filtering circuitry. They contain circuitry for measuring the electrical current being output to the DC bus 140 by their respective power source 120, 130, 150. The power converters 126, 136, 165 in this example are all bi-directional.

The engine 110 may be a parallel hybrid-electric turbofan engine-i.e. with thrust able to be provided by a gas turbine and by one or more of the electrical machines 120, 130 that are mechanically coupled to the gas turbine. Although this example has two spools 121, 131, other engines falling within the present disclosure may have a single spool, or three or more spools.

In some examples, the LP machine 120 and/or HP machine 130 could each be a group of two or more machines, instead of being a single machine.

The machines 120, 130 can be powered by the battery system 150 to inject additional torque into the spools 121, 131 when the engine 110 is operating at peak power such as during take-off or during an ascent protocol. The machines 120, 130 can operate in a regeneration mode during other stages of the flight when mechanical power is extracted from the engine spools 121, 131 to recharge the on-board battery 150. Certain operation modes may be possible where the energy is transferred between the HP spool 131 and LP spool 121, with one spool powering the motors of the other spool.

The overall operation of the system can be controlled by the HEP controller 170 which decides the operation mode of the machines 120, 130 on each spool and which power source should be powering the DC bus 140: the LP spool machine 120, or the HP spool machine 130, or the battery system 150.

In one HEP configuration, all electrical machines of the same spool 121, 131 will share power equally, while steady-state power will be provided entirely from one source (HP spool machine 130, LP spool machine 120 or a battery system 150).

As explained in more detail below, the transfer of power generation from one spool 120, 130 to a different spool 120, 130 or to the battery 150 is, according to examples disclosed herein, conducted smoothly over a predetermined period of time (e.g. 1 second) thereby ensuring the stability of the jet engine 110 operation by avoiding abrupt torque changes and unnecessary torque fluctuations. Safety and stability are met by the system 100 being robust to intermittent communication failures between the elements of the system 100. Additionally, it is desirable to limit the communication bandwidth requirements between the HEP controller 170 and the local controllers 125, 135, 160 to ensure backwards compatibilities with existing CAN communication systems already present on existing aircrafts and engines, e.g. to support installation of the system 100 onto an existing aircraft.

This is achieved by the local controllers 125, 135, 160 using droop control to control the voltage that is output to the DC bus 140 their respective power sources 120, 130, 150, in accordance with a respective droop gain, and by the local controllers 125, 135, 160 adjusting their own droop gains progressively over a time interval when implementing a change to the active power source 120, 130, 150. The droop gains are used to control the DC output voltage based on the amount of electrical current that is output by the respective power source, as measured by circuitry within the local controller (e.g. equalling a nominal output voltage minus the product of the droop gain and the output current).

The aim of the power transfer, as performed by the system 100, is to progressively reduce the proportion of power generation from one source, eventually to zero or close to zero, and to progressively increase the proportion of power generation from another source, all while maintaining DC bus 140 stability. This requires the droop gain of the source with decreasing power output to increase progressively over at least a first portion of the time interval. Similarly, the droop gain of the source with increasing power output decreases progressively over at least a second portion of the time interval. The two sources will reach equal droop gains, and thus will share the power generation equally, only momentarily at a time $T_m$ which, at least in some examples, occurs in the middle of the overall transition time interval.

Droop gain curves (i.e. functions of droop gain value over time) can be precalculated, and stored in the respective local controller 125, 135, 160, for implementing a smooth power transfer between any one of the LP spool machine 120, the HP spool machine 130 and the battery system 150 to any other one of these sources. These predetermined functions may be stored as one or more parameters for a mathematical function (e.g. implemented in software), or as time-varying droop gain values stored in a look-up table. This use of local control means the HEP controller 170 need decide only when to initiate a change of power source, without having to manage the process directly. The process can be triggered by the HEP controller 170 sending a single respective CAN message sent to two or three of the local controller 125, 135, 160 over the CAN bus 175, or in some examples by broadcasting just one CAN message that is received by multiple local controllers. This results in very minimal CAN bus traffic. Each of the local controllers then effects a change of droop gain in accordance with a respective predetermined droop gain function to achieve the power transfer without consuming additional communication bandwidth.

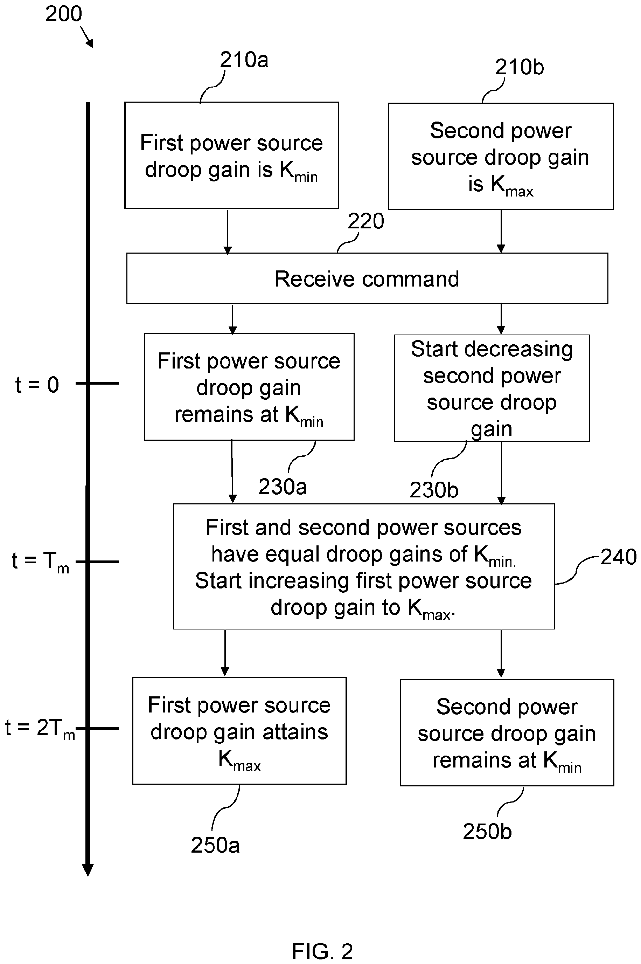

Figure 2 describes an example method 200 for adjusting the power balance between two power sources of an aircraft that may be performed by any pair of the local controllers 125, 135, 160. The steps may be implemented, by each local controller, using dedicated circuitry (e.g. digital logic) in the controller or by a microcontroller of the controller executing software stored in a memory of the controller, or using a combination of hardware and software.

At step 210a, a first power source (e.g. the LP spool 120) is operating with a minimal droop gain $K_{min}$ (which may be zero, or a value close to zero) and is providing all or almost all of the power being drawn from the DC bus 140 by the attached loads 141, 142. Simultaneously, at step 210b, a second power source (e.g. the HP spool 130) is operating at maximal droop gain $K_{max}$, and hence outputs zero power or a minimal idle power. The third power source (e.g. the battery system 150), and any further power sources, are also being controlled with respective maximum droop gains and outputting zero or minimal power.

Next, at step 220, the first controller (e.g. LP controller 125) and second controller (e.g. HP controller 135) each receive a command from the HEP controller 170, over the CAN bus 175, to begin a power transfer. This single command (sent as one broadcast or multicast message, or as two unicast messages) is all that is necessary for each controller to begin the adjustment of its respective droop gain for its respective power source in accordance with a respective predetermined function of time. Thus, there is no need for further instructions or supervision from the HEP controller 170 or any other central controller.

At a time t=0 and step 230a, in response to receiving the command, the first local controller maintains its droop gain at $K_{min}$ for a first time period of duration $T_m$ (being half of the total transition time interval, $T_{tr}$). Meanwhile, at step 230b, the second local controller starts to decrease its droop gain from a maximum $K_{max}$ according to a second predetermined function of time over the same first time period of duration $T_m$.

Each local controller 125, 135, 160 may be configured to change its droop gain in accordance with either of two functions of times: a first function for use when commanded to increase its droop gain, and a second function for use when commanded to decrease its droop gain.

The time interval ($T_{tr} = 2 \times T_m$) over which each controller adjusts its droop gain may be preconfigured (e.g. always being 1000 milliseconds), or may be configurable by the HEP controller 170 and encoded in the command that is received by each local controller.

Midway through the power transfer, at step 240 where t = $T_m$, the droop gains of the first power source and the second power source are equal to $K_{min}$. Both power sources at this instant in time are sharing the load on the DC bus 140 equally. The droop gains will then begin to diverge as the power transfer progresses. The droop gain of the first power source will start to increase, according to the first predetermined function of time, for a second time period of duration $T_m$, and the droop gain of the second power source remains fixed at the minimum value $K_{min}$ for the same second time period of duration $T_m$.

Finally, at time t = $T_{tr}$ = $2T_m$ and step 250a, the droop gain for the first power source reaches a maximum value $K_{max}$, and the first power source outputs zero or minimal idle power. Simultaneously, the droop gain of the second power source remains at the minimum value $K_{min}$, and produces all or almost all of the power required by the DC bus 140. After the transfer has taken place, the second power source now supplies almost all of the power required by the DC bus 140 and its connected loads.

Having a minimal droop gain that is close to but greater than zero (e.g. less than 0.5, such as 0.25 or less), may be useful if one power source comprises a group of power sources, such as a plurality of electrical machines all mechanically coupled to the same spool, since this allows the local controller to control each member of the group using a respective droop gain, in order to share the load between them, such that the resulting droop gain for the group has the minimal droop gain value. This would not be so straightforward if the minimum were set at zero.

The two predetermined functions of time by which the droop gains of the power sources are adjusted may take any number of forms. In some examples, the functions are rational functions. Each comprise a constant portion and a changing portion. Each changing portion may be a respective ratio of a pair of polynomial functions. Where it is desired for a substantially linear transfer of power between two power sources to take place, the functions take the forms described below. However, in other examples, different functions may be implemented.

The following is a derivation of the droop gain curves when power is transferred from a first source, A, to a second source, B. It will be appreciated that source A and B can represent any of the power sources that may be present in or connected to the aircraft. This example assumes all other power sources have a maximal droop gain, such that they are effectively not contributing any power to the DC bus 140.

Initially, source A provides a nominal power $P_N$ while source B operates in an idle mode generating a minimal idle power $P_0$. In some examples, particularly where the power source is a single electrical machine, $P_0$ may be zero. The ratio between these two extreme powers equals the inverse ratio of the extreme droop gain values:

$$\frac{P_N}{P_0} = \frac{K_{max}}{K_{min}} \qquad (1)$$

During the transition time interval, $T_{tr}$ = $2T_m$, the power output $P_B$ from source B is progressively increased as a linear function of time according to:

$$P_B = P_0 + \left(\frac{P_N - P_0}{2T_m}\right)t$$

where $T_m$ denotes the time at which the transfer of power is at its midpoint after time zero. Although in this example the change in power is linear, this is not essential in all examples, and it may be any other suitable function. However, a linear change in the power advantageously provides a particularly stable transition between the power sources, and it minimises torque fluctuations applied to the spools of the engine.

In order for the total power generated by source A and source B to remain constant, source A decreases its power output at the same rate as source B is increased. Thus, the power output $P_A$ from source A is progressively decreased as a corresponding linear function of time according to:

$$P_A = P_N - \left(\frac{P_N - P_0}{2T_m}\right)t$$

By taking the ratio $P_B/P_A$ of the powers at source B and source A, an expression for the changing droop gain $K_B(t)$ of source B, that local controller should implement, can be determined, as follows, by noting that, initially, the droop gain at source A is kept constant at the minimum value $K_{min}$ for the first half of the time interval:

$$\frac{P_B}{P_A} = \frac{P_0 + \dfrac{P_N - P_0}{2T_m} \cdot t}{P_N - \dfrac{P_N - P_0}{2T_m} \cdot t} = \frac{K_{min}}{K_B}$$

Rearranging this gives:

$$K_B = K_{min} \cdot \frac{P_N - \dfrac{P_N - P_0}{2T_m} \cdot t}{P_N + \dfrac{P_N - P_0}{2T_m} \cdot t}$$

By substituting for $P_N$ using Equation (1), the function $K_B(t)$, which is implemented by the second local controller, can be expressed in terms of $K_{min}$ and $K_{max}$ as:

$$K_B = K_{min} \cdot \frac{\dfrac{K_{max}}{K_{min}} - \dfrac{\frac{K_{max}}{K_{min}} - 1}{2T_m} \cdot t}{1 + \dfrac{\frac{K_{max}}{K_{min}} - 1}{2T_m} \cdot t}$$

This can be further simplified by introducing two constants $T_1$ and $T_2$ as:

$$K_B = \frac{K_{max} \cdot \left(1 - \dfrac{t}{T_1}\right)}{1 + \dfrac{t}{T_2}}$$

where the time constants $T_1$ and $T_2$ are dependent on $K_{max}$ and $K_{min}$ as well as the length of the transition interval, $2.T_m$. Importantly, these time constants are independent of DC voltage, electrical load, and any other variable parameter. Expressions for the time constants $T_1$ and $T_2$ can be given as:

$$T_1 = \frac{2T_m \cdot K_{max}}{K_{max} - K_{min}} \approx 2T_m$$

$$T_2 = \frac{2T_m \cdot K_{min}}{\mathrm{K_{max}} - \mathrm{K_{min}}}$$

$T_1$ may be approximated as 2. $T_m$ because, in most examples, $K_{max} \gg K_{min}$.

To ensure that the change in $K_A$ is the mirror image in time of the change in $K_B$, the time variable $t$ can be substituted by $2T_m - t$, resulting in the following expression for $K_A$:

$$K_A = \frac{K_{max} \cdot \left(1 - \frac{T_{tr} - t}{T_1}\right)}{1 + \frac{T_{tr} - t}{T_2}}$$

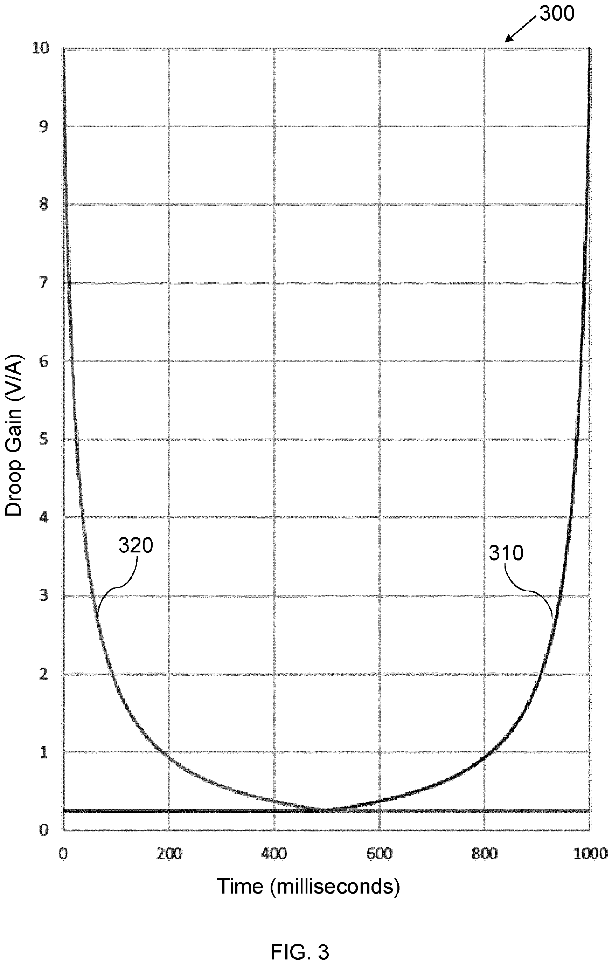

Thus, it can be seen that, in the example described above, the predetermined functions of time describing the evolution of the droop gain for the second power source is a rational curve during a first half of the transition time interval, $T_{tr}$, while the droop gain of the first power source is kept constant at $K_{min}$, and the evolution of the droop gain for the first power source is a rational curve during a second half of the transition time interval, $T_{tr}$, while the droop gain of the second power source is kept constant at $K_{min}$. These curves have forms as exemplified in Figure 3.

Figure 3 shows an example transfer between two power sources over a time interval of 2. $T_m$ = 1,000ms, by the respective local controllers changing their droop gains in accordance with the equations defined above. The droop gain 310 for the first power source increases as the droop gain 320 for the second power source decreases, in order to transfer the load progressively from the first power source to the second power source. In this example, both local controllers use the same $K_{min}$ of 0.25 V/A and the same $K_{max}$ of 10 V/A. In most examples, local controllers will be configured to use the same maximum and minimum droop gain values, but this is not essential in all examples . In this example, the DC bus 140 has a nominal DC voltage of 800V and is supplying a purely resistive load of 8Ω. Thus, the operating power to be maintained is 80kW. The curves shown in Figure 3 are symmetrical, crossing at t = $T_m$, as expected. Consequently, the power output is shifted from the first source to the second source in a smooth and controlled manner, as desired. Even if the load were to vary during the transition interval, the ratio of the output powers generated by the two power sources will continue to shift progressively.

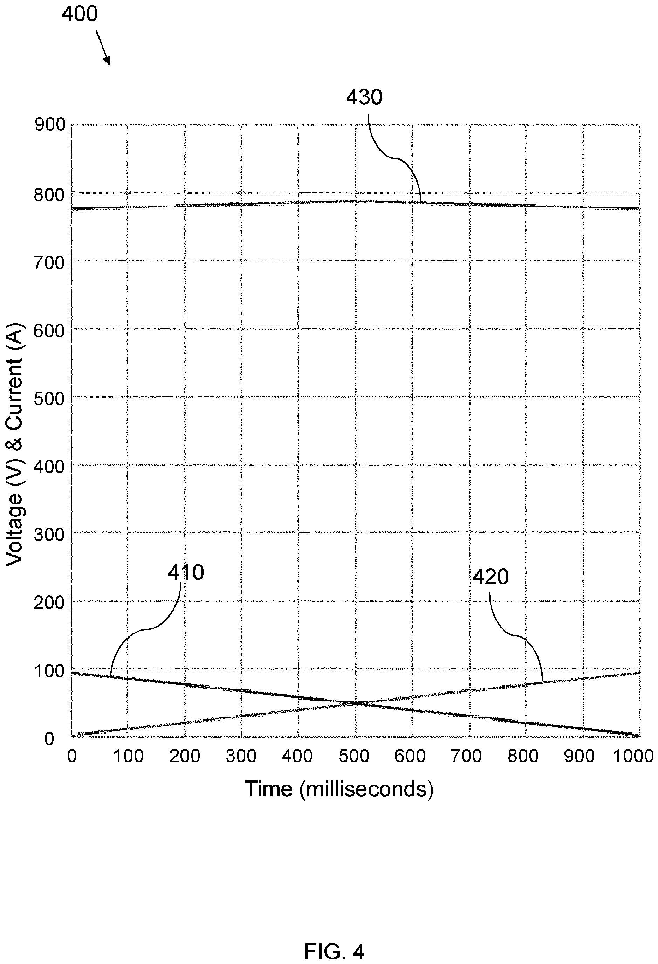

Figure 4 is a graph 400 that shows the corresponding changes in the currents 410, 420 output by the power sources and the resulting voltage 430 of the DC bus 140 over the course of the transition, using the same parameters as for Figure 3. The current 410 of the first power source decreases from just below 100A to nearly 0A as the droop gain for the first power source is increased. Simultaneously, the current 420 of the second power source increases from nearly 0A to just below 100A as the droop gain for the second power source is decreased. The voltage 430 on the DC bus 140 can be seen to stay approximately constant at around 790V, close to the nominal voltage of 800V, only peaking slightly at the midpoint of the transition (t = $T_m$ = 500ms) over the time interval ($T_{tr}$ = 2$T_m$).

It will be appreciated by those skilled in the art that the disclosure has been illustrated by describing one or more specific examples thereof, but is not limited to these examples; many variations and modifications are possible within the scope of the accompanying claims.

## Claims

1. An electrical system for an aircraft, the electrical system comprising:
   a local controller configured to control a power source of the aircraft using droop control in accordance with a droop gain;
   wherein the local controller is configured, in response to receiving a command, to adjust the droop gain from a first value to a second value, through a plurality of intermediate values, over a time interval according to a predetermined function of time.

2. The electrical system of claim 1, comprising a DC distribution system arranged to receive electrical power from the power source.

3. The electrical system of claim 1 or 2, wherein the local controller comprises converter circuity for controlling an output voltage of the power source in accordance with the droop gain.

4. The electrical system of claim 3, wherein the local controller comprises current-measuring circuitry and is configured to control the output voltage in dependence on a measured output current in accordance with the droop gain.

5. The electrical system of claims 3 or 4, wherein the local controller is configured to control the output voltage to be offset from a predetermined nominal voltage by a function of the droop gain.

6. The electrical system of any preceding claim, wherein the predetermined function of time includes a portion of time during which the droop gain is constant, and a portion of time during which the droop gain is changing.

7. The electrical system of claim 6, wherein the constant portion occurs before the changing portion and the second value is higher than the first value, or the constant potion occurs after the changing portion and the first value is higher than the second value.

8. The electrical system of any preceding claim, wherein the local controller is a first local controller and the power source is a first power source, and wherein the electrical system further comprises a second local controller configured to control a second power source of the aircraft using droop control in accordance with a second droop gain.

9. The electrical system of claim 8, wherein the second local controller is configured, in response to receiving the command, or a second command, to adjust the second droop gain in an opposite direction to the first droop gain, over the time interval, according to a second predetermined function of time.

10. The electrical system of claim 9, wherein the second predetermined function is a mirror image of the first predetermined function about the midpoint of the time interval.

11. The electrical system of any of claims 8 to 10, wherein the first and second power sources are electrically coupled to a common DC distribution system.

12. The electrical system of any preceding claim, comprising a central controller, communicably coupled to the, or each, local controller, and configured to issue the command to the local controller.

13. The electrical system of any preceding claim, further comprising the power source.

14. An aircraft comprising the electrical system of any preceding claim.

15. A method performed by a local controller for a power source of an aircraft, the method comprising:

controlling the power source in accordance with a droop gain;
receiving a command; and
in response to receiving the command, adjusting the droop gain of the local controller from a first value to second value, through a plurality of intermediate values, over a time interval according to a predetermined function of time.

FIG. 1

200

210a

First power source droop gain is $K_{min}$

210b

Second power source droop gain is $K_{max}$

220

Receive command

t = 0

First power source droop gain remains at $K_{min}$

230a

Start decreasing second power source droop gain

230b

t = $T_m$

First and second power sources have equal droop gains of $K_{min}$. Start increasing first power source droop gain to $K_{max}$.

240

t = $2T_m$

First power source droop gain attains $K_{max}$

250a

Second power source droop gain remains at $K_{min}$

250b

FIG. 2

FIG. 3

FIG. 4

Europäisches
Patentamt

European
Patent Office

Office européen
des brevets

# EUROPEAN SEARCH REPORT

**Application Number**

EP 24 27 5001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/004029 A1 (SHIROKOV VLADIMIR A [GB] ET AL) 7 January 2021 (2021-01-07) * paragraphs [0002] - [0045], [0058] - [0064]; figures 1-5 * | 1-9, 11-15 | INV. H02J1/10 H02J1/12 H02J1/14 |
| A | US 2022/261023 A1 (DASGUPTA SOUVIK [SG] ET AL) 18 August 2022 (2022-08-18) * paragraphs [0004], [0024], [0032], [0044], [0052], [0056], [0060], [0072] - [0074]; figures 1-14 * | 1-15 | |
| A | MAHMOOD HISHAM ET AL: "A Power Management Strategy for PV/Battery Hybrid Systems in Islanded Microgrids", IEEE JOURNAL OF EMERGING AND SELECTED TOPICS IN POWER ELECTRONICS, IEEE, PISCATAWAY, NJ, USA, vol. 2, no. 4, 1 December 2014 (2014-12-01), pages 870-882, XP011562925, ISSN: 2168-6777, DOI: 10.1109/JESTPE.2014.2334051 [retrieved on 2014-10-29] * page 870 - page 882 * | 1-15 | **TECHNICAL FIELDS SEARCHED (IPC)** H02J |
| A | KHORSANDI A ET AL: "An adaptive droop control method for low voltage DC microgrids", THE 5TH ANNUAL INTERNATIONAL POWER ELECTRONICS, DRIVE SYSTEMS AND TECHNOLOGIES CONFERENCE (PEDSTC 2014), IEEE, 5 February 2014 (2014-02-05), pages 84-89, XP032587042, DOI: 10.1109/PEDSTC.2014.6799349 [retrieved on 2014-04-16] * page 84 - page 89 * | 1-15 | |

The present search report has been drawn up for all claims

| Place of search | Date of completion of the search | Examiner |
|---|---|---|
| Munich | 13 June 2024 | Krasser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 27 5001

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2024

| Patent document cited in search report | | Publication date | Patent family member(s) | | Publication date |
|---|---|---|---|---|---|
| US 2021004029 | A1 | 07-01-2021 | EP 3761470 A1 | | 06-01-2021 |
| | | | US 2021004029 A1 | | 07-01-2021 |
| US 2022261023 | A1 | 18-08-2022 | NONE | | |

EPO FORM P0459

For more details about this annex : see Official Journal of the European Patent Office, No. 12/82